# EUROPEAN PATENT APPLICATION

(11) **EP 4 538 956 A1**
(43) Date of publication of application: **16.04.2025**
(21) Application number: 23860886.3
(22) Date of filing: 30.08.2023
(51) Int. Cl.: G06Q 50/06, H04W 8/24, G05F 1/66

(54) **POWER MANAGEMENT DEVICE, AND POWER MANAGEMENT METHOD USING SAME**

(30) Priority: 30.08.2022 KR 20220109426
(71) Applicant: LG Electronics Inc., Yeongdeungpo-gu Seoul 07336 (KR)
(72) Inventor: YOO, Hyunsun, Seoul 08592 (KR); KANG, Min Jeong, Seoul 08592 (KR); LIM, Sukhyun, Seoul 08592 (KR)
(74) Representative: Ter Meer Steinmeister & Partner
(86) International application number: PCT/KR2023/012915
(87) International publication number: WO 2024/049210

(57) **Abstract**

A power management system and service method according to the present invention makes it possible to distribute the power consumption at a specific time for each of home appliances in a home while sharing power information with the home and a power company. To this end, a service server can be operated by setting an operation priority according to a user's usage pattern or by setting the operation priority according to whether usage is regular or irregular. In addition, the service server can recommend devices that can be alternatively operated to reduce or distribute power consumption.

## Description

### Technical Field

The present disclosure relates to a new type of power management device and a power management method using the same that enables efficient management of power usage on the basis of the power usage of each home appliance used in a household.

### Background Art

In general, home appliances that are operated by electricity are becoming more diverse in terms of purpose or usage environment thereof as technology advances, and the number of types thereof is also increasing rapidly.

Home appliances may be divided into home appliances that are continuously used and home appliances that are selectively used.

An example of the appliances that are continuously used is a refrigerator. Examples of the home appliances that are selectively used include an air purifier, a heating and cooling system, a TV, a washing machine, a vacuum cleaner, a heating appliance, a dishwasher, and a clothing care appliance.

Recently, interest in energy consumption has been increasing, and various systems or service methods for managing power on the basis of power monitoring information for the home appliances are being provided.

For example, technologies for checking and utilizing the amount of power used by home appliances are provided in Korean Patent Application Publication No. 10-2011-0117557 (prior art 1), Korean Patent Application Publication No. 10-2011-0049030 (prior art 2), and Korean Patent Application Publication No. 10-2012-0010686 (prior art 3).

In the case of the prior art 1, a technology is provided to control the operation of home appliances in response to rate information that varies depending on power consumption. That is, it is possible to reduce an electricity bill by enabling operation by changing an operational setting according to rate information.

In the case of the prior art 2, a technology is provided for controlling the power consumption of an electrical product to be saved on the basis of power information about the electrical product and power information supplied from an external source.

In the case of the prior art 3, a technology is provided to reduce power consumption by stopping an operation or changing an operation method when operating in an on-peak period.

However, prior arts including the prior arts 1 to 3 above only performed control using the amount of power usage for a single home appliance alone but did not consider the operations of other home appliances. That is, all prior arts only performed control of a single home appliance and did not control the operation of other home appliances in an integrated manner. Accordingly, in the prior arts, there were cases where each home appliance was operated simultaneously at a specific time. Accordingly, in the past, there were cases where power consumption could not be reduced even during times at which power consumption should be avoided.

Additionally, for each home appliance provided in a household, both continuously used appliances and selectively used appliances are provided. However, the prior arts including the prior arts 1 to 3 controlled only home appliances that are used selectively and did not control home appliances that are used continuously.

Meanwhile, in the past, when a user requested the operation of a specific home appliance despite a shortage of power supply, only energy saving control for the corresponding home appliance was performed. That is, in the past, when the operation of a specific home appliance was required, other home appliances provided in the corresponding household were not considered at all, so there was a limit to reducing power consumption.

In particular, although there are various home appliances provided in the corresponding household, they are not properly utilized and only one home appliance is continuously used. This resulted in a shortened lifespan due to long-term non-use and a shortened lifespan due to long-term heavy use.

### Disclosure

### Technical Problem

The present disclosure has been devised to solve various problems of the previously described prior arts.

An objective of the present disclosure is to provide a power management device and a power management method that are capable of reducing a maximum load used at a specific time point when operating a plurality of home appliances provided in a household.

Another objective of the present disclosure is to provide a power management device and a power management method that enable each home appliance to be operated by considering a usage pattern of a user when the home appliance is used during a first time period in which power is insufficient or power usage is high.

Another objective of the present disclosure is to provide a power management device and a power management method that enable a plurality of home appliances to be operated according to preset priorities when the home appliances are requested to be used simultaneously during the first time period in which power is insufficient or power usage is high.

Another objective of the present disclosure is to provide a power management device and a power management method that enable power consumption to be reduced by recommending alternative devices that are capable of replacing the operations of a plurality of home appliances provided in a household.

### Technical Solution

According to a power management device of the present disclosure to achieve the above objectives, operation order or operation time may be recommended to be different depending on the usage pattern of two or more home appliances provided in a household.

According to the power management device of the present disclosure, operating order or operation may be recommended to be different depending on whether two or more home appliances provided in a household are constantly in operation or are selectively operated.

According to the power management device of the present disclosure, by considering the operation status or operation mode of two or more home appliances provided in a household, operation of another home appliance that is capable of being operated instead of one home appliance may be recommended.

The power management device of the present disclosure may provide a user application which allows information about home appliances in a household to be checked.

According to the power management device of the present disclosure, a service server may receive information about two or more home appliances provided in a household online or provide a control signal to each of the home appliances online.

According to the power management device of the present disclosure, the service server may provide information for the operation of each home appliance.

According to the power management device of the present disclosure, the service server may receive information online, store the received information, and provide a control signal online.

According to the power management device of the present disclosure, the service server may receive power information from a power company.

According to the power management device of the present disclosure, the service server may receive and store information about each home appliance.

According to the power management device of the present disclosure, the service server may identify at least one home appliance that is operated or predicted to be operated during a first time period in which power supply is insufficient.

According to the power management device of the present disclosure, the first time period may be predicted on the basis of power information provided directly by the power company or obtained from the power company.

According to the power management device of the present disclosure, the service server may recommend an operation mode of an appliance or other appliances that is operated during the first time period to reduce power consumption during the first time period in which power supply is insufficient.

According to the power management device of the present disclosure, the service server may classify and store usage patterns by day of the week or time on the basis of information about each home appliance.

According to the power management device of the present disclosure, the service server may identify home appliances that are mainly used during the first time period in which power supply is insufficient on the basis of the classified usage patterns.

According to the power management device of the present disclosure, the service server may recommend to a user through the user application that home appliances other than the home appliances primarily used during the first time period in which power supply is insufficient be switched to a power saving mode or stopped from being used.

According to the power management device of the present disclosure, the service server may guide the operation of a home appliance to be performed in a second time period before the first time period in which power supply is insufficient, or in a third time period after the first time period.

According to the power management device of the present disclosure, the service server may identify an alternative home appliance with an alternative operation mode that consumes relatively less energy than a home appliance being requested to be operated, and recommend the alternative home appliance to a user through the user application.

According to the power management device of the present disclosure, the alternative home appliance may be a home appliance that has an operation mode classified as a function similar to an operation mode intended for operation.

According to the power management device of the present disclosure, the service server may register home appliances by classifying the home appliances into home appliances of a first type which are used continuously and home appliances of a second type which are used selectively on the basis of information about the home appliances acquired from the home appliances.

According to the power management device of the present disclosure, the service server may sequentially operate each of two or more home appliances belonging to the first type or the second type according to a pre-designated operation priority when the two or more home appliances are requested to be operated simultaneously during the first time period in which power supply is insufficient.

According to the power management device of the present disclosure, the service server may classify and store home appliances by operation modes which consume different amounts of energy while providing similar effects on the basis of information about the home appliances.

According to the power management device of the present disclosure, the service server may recommend, to the user application, an alternative home appliance with an alternative operation mode that consumes relatively less energy during the first time period in which power supply is insufficient.

According to the power management device of the present disclosure, the information of each home appliance stored in the service server may include at least one of information on power consumption by operation mode, information on usage patterns by time or day of the week, information on whether the appliance is used continuously or selectively, and information on alternative home appliances and operation modes thereof.

In addition, a power management method of the present disclosure to achieve the above objectives may include a first step of acquiring and storing information about two or more home appliances provided in a household.

The power management method of the present disclosure may include a second step of identifying at least one first home appliance that is operated or predicted to be operated during the first time period in which power supply is insufficient.

The power management method of the present disclosure may include a third step of recommending an operation of the first home appliance identified in the second step or operations of other home appliances to reduce power consumption during the first time period in which power supply is insufficient.

According to the power management method of the present disclosure, the first step may include a first process of classifying and storing a usage pattern for each of home appliances.

According to the power management method of the present disclosure, the third step may include a second process of recommending that home appliances other than home appliances used mainly during the first time period in which power supply is insufficient be switched to a power-saving mode or stopped from being used.

According to the power management method of the present disclosure, the first step may include the third process of registering the home appliances by classifying the home appliances into home appliances of the first type that are used continuously and home appliances of the second type that are used selectively.

According to the power management method of the present disclosure, the third step may include a fourth process of recommending that the home appliances of the first type operate normally and the home appliances of the second type operate in a power-saving mode or stop from operating during the first time period in which power supply is insufficient.

According to the power management method of the present disclosure, the first step may include a fifth process of classifying and storing the home appliances by operation modes which consume different amounts of energy while providing similar effects on the basis of the information about the home appliances

According to the power management method of the present disclosure, the third step may include a sixth process of recommending an alternative home appliance with an alternative operation mode that consumes relatively less energy in the first time period.

To achieve the above objectives, the power management device of the present disclosure according to another aspect may include an information acquisition unit that acquires information related to power load for each operation mode of a corresponding home appliance and information related to current operation status from home appliances provided in a household.

The power management device of the present disclosure may include a load calculation unit that checks real-time power load and calculates or predicts power load by time period on the basis of the information acquired from the information acquisition unit.

The power management device of the present disclosure may include an information provision unit that is communicatively connected to the power company that supplies or sells power and provides or receives power information.

According to the power management device of the present disclosure, power information provided to the power company may include information about the amount of power load used by each household or the amount of power load expected to be used by each household.

The power management device of the present disclosure may include a database in which information acquired by the information acquisition unit or power information provided by the power company is stored.

The power management device of the present disclosure may include a control unit that controls the operation of the home appliance while being linked to the database.

According to the power management device of the present disclosure, the control unit may be configured to receive information from at least one of the information acquisition unit, the load calculation unit, and the information provision unit.

According to the power management device of the present disclosure, home appliances may be connected to applications installed on a user terminal to enable data transmission and reception.

According to the power management device of the present disclosure, the information acquisition unit may be connected to the applications installed on the user terminal to enable data transmission and reception.

According to the power management device of the present disclosure, information stored in a database may be stored by dividing the information into user-specific classification and zone-specific classification.

According to the power management device of the present disclosure, the control unit may receive information about time at which maximum load occurs from the power company through the information provision unit.

According to the power management device of the present disclosure, the control unit may adjust the execution time of the operation of a home appliance when a request for the operation of the home appliance occurs at a time at which maximum load provided from the information provision unit occurs.

According to the power management device of the present disclosure, the control unit may adjust the execution time of the operation when it is checked that the current power load of a corresponding household exceeds preset power load.

According to the power management device of the present disclosure, the control unit may search for and recommend an operation mode that requires relatively lower power load when it is checked that the current power load of a corresponding household exceeds the preset power load.

According to the power management device of the present disclosure, the control unit may search for and recommend a home appliance with an operation mode capable of alternative operation when it is checked that the current power load of a corresponding household exceeds the preset power load.

According to the power management device of the present disclosure, the information provision unit may receive information about a current power load from the power company.

The power management method of the present disclosure to achieve the above objectives may include an information acquisition step for acquiring information related to a power load for each operation mode of a corresponding home appliance and information related to current operation status from the home appliance installed in the home.

The power management method of the present disclosure may include a load calculation step for checking a real-time power load on the basis of information acquired in the information acquisition step and calculating or predicting power load by time period.

The power management method of the present disclosure may include an information provision step of being able to communicate with the power company that supplies or sells electricity and providing the power company with information about a power load used by each household or the amount of a power load expected to be used by each household.

The power management method of the present disclosure may include a control step for controlling the operation of each home appliance by using the power information when a user request or a preset operation request is made for one home appliance.

According to the power management method of the present disclosure, the control step may include a process of receiving information from the power company about a time period at which a maximum load occurs through the information provision step.

The power management method of the present disclosure may include a process of adjusting the execution time of an operation of a home appliance when a request for the operation of the home appliance occurs during a time period at which the maximum load provided occurs.

According to the power management method of the present disclosure, the process of adjusting the execution time of an operation may include a process of recommending that the operation be terminated prior to the time period at which the maximum load occurs.

According to the power management method of the present disclosure, the process of adjusting the execution time of an operation may include a process of recommending that the operation be started after the time period at which the maximum load occurs.

According to the power management method of the present disclosure, the process of adjusting the execution time of an operation may include a process of recommending that the time period at which the maximum load occurs and a time period at which the maximum load is required for the corresponding operation are different.

According to the power management method of the present disclosure, the control step may include a process of adjusting the start time of a corresponding operation when it is determined that the current power load of a corresponding household exceeds a preset maximum power load.

According to the power management method of the present disclosure, the control step may include a process of searching for and recommending an operation mode requiring a relatively lower power load when it is determined that the current power load of a corresponding household exceeds the preset maximum power load.

According to the power management method of the present disclosure, the control step may include a process of searching for and recommending a home appliance with an operation mode capable of alternative operation when it is checked that current power load used in a corresponding household exceeds preset power load.

According to the power management method of the present disclosure, the control step may include a process of checking a time point at which the maximum load of a continuously used home appliance occurs when a request for operation of a specific home appliance that is selectively used occurs, and recommending that the requested operation of the home appliance be performed before or after the time point at which the maximum load occurs.

According to the power management method of the present disclosure, the information provision step may include a process of receiving information about a current power load from the power company.

According to the power management method of the present disclosure, in the information provision step, information provided to the power company may be provided in an integrated manner by a preset region, zone, or area.

According to the power management method of the present disclosure, in the information provision step, information provided to the power company may be provided by dividing the information into power load that is constantly used and power load that is selectively used.

### Advantageous Effects

As described above, the power management device and the power management method of the present disclosure have the effect of enabling a power company to predict real-time power demand by sharing information with the power company.

The power management device and the power management method of the present disclosure may reduce maximum power load allowed for a household at a specific time point because a home appliance is operated within a set range of power load.

The power management device and the power management method of the present disclosure have the effect of preventing an increase in power consumption in the first time period when each home appliance is operated by considering the usage pattern of a user.

The power management device and the power management method of the present disclosure have the effect of reducing power consumption by sequentially operating each of home appliances according to a pre-designated operation priority even when the plurality of home appliances are operated simultaneously in the first time period.

The power management device and the power management method of the present disclosure have the effect of minimizing power consumption for performing an operation required by a user in the first time period since the use of an alternative home appliance that has relatively lower power consumption and is replaceable is recommended.

### Description of Drawings

FIG. 1 is a configuration diagram of a power management system according to an embodiment of the present disclosure.
FIG. 2 is a flowchart of a service method using the power management system according to an embodiment of the present disclosure.
FIGS. 3 to 7 are flowcharts illustrating respective examples for reducing power consumption among power management service methods according to an embodiment of the present disclosure.
FIGS. 8 to 10 are flowcharts illustrating the operation process of each home appliance according to the usage pattern of a user among power management service methods according to an embodiment of the present disclosure.
FIG. 11 and 12 are flowcharts illustrating an operation process when two or more home appliances are used simultaneously among power management service methods according to an embodiment of the present disclosure.
FIGS. 13 and 14 are flowcharts illustrating other examples when a home appliance is used in a first time period among power management service methods according to an embodiment of the present disclosure.

### Mode for Invention

Before explaining embodiments of the present disclosure, when adding reference numerals to components in each drawing, it should be noted that identical components are given the same reference numerals as much as possible even if they are shown in different drawings.

In addition, when explaining the embodiments of the present disclosure, if a detailed description of the related known configuration or function is determined to hinder understanding of the embodiments of the present disclosure, detailed description thereof is omitted.

Additionally, in describing the components of the embodiments of the present disclosure, terms such as first, second, A, B, (a), (b), etc. may be used. These terms are only intended to distinguish one component from another and do not limit the nature, order, or sequence of the component. When a component is described as being "connected", "coupled", or "joined" to another component, it should be understood that the component may be directly connected or joined to the another component, but that there may be still another component "connected", "coupled", or "joined" between the components.

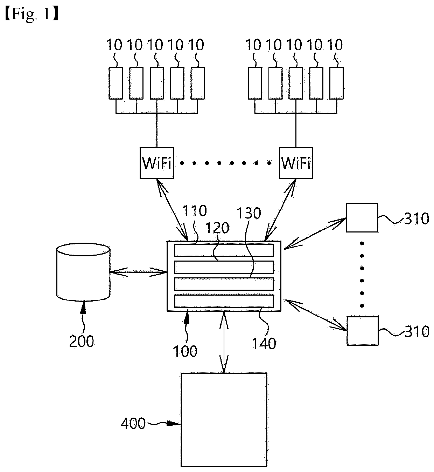

Hereinafter, preferred embodiments of a power management device and a power management method of the present disclosure are described with reference to the attached FIGS. 1 to 14.

According to an embodiment of the present disclosure, as shown in the attached FIG. 1, the power management device includes a user application 310 that communicates with each home appliance in a household and a service server 100 that is capable of performing various services in cooperation with the user application 310 online.

The user application 310 may be either an application installed on a terminal of a user (e.g., a mobile phone or other mobile terminal) or an application installed on a home network. The user application 310 may be linked with the service server 100 to receive various pieces of information related to a home appliance 10 of a corresponding household or check the control of the home appliance 10 of the corresponding household. That is, the user application 310 may be an application made to receive various pieces of information about each home appliance 10 from the service server 100 and perform the function of checking the status of the corresponding home appliance 10. For example, the user application 310 may be configured to receive information about a plurality of pre-designated or selected home appliances 10 while communicating with the service server 100.

Of course, the user application 310 may provide various pieces of information to the service server 100 online, and may receive information directly from each home appliance 10 through a wireless communication network (e.g., Wi-Fi or Bluetooth, etc.) within a corresponding home.

The above service server 100 may be configured to receive service requests through multiple user applications 310 online and provide the requested services.

The service may include a service that provides information for operating home appliances 10 provided in each household.

To provide this service, the service server 100 identifies at least one home appliance 10 that is operated or predicted to be operated during a first time period in which power supply is insufficient. In this case, the first time period may be a time period provided directly from a power company, a time period predicted on the basis of power information obtained from the power company, or a time period predefined by other methods.

In addition, the service server 100 may recommend that the home appliance 10 be operated in a different usage pattern from a main usage pattern thereof in order to reduce power consumption in the first time period.

The service server 100 may acquire usage information of each home appliance 10 and store the usage information by classifying the usage information into usage patterns by day of the week or time. The usage patterns may be set by at least one of time and indoor temperature.

The service server 100 may identify a home appliance 10 that is mainly used in the first time period on the basis of the usage patterns, and may recommend to the user application 310 that home appliances other than the identified home appliance be switched to a power saving mode or stopped from being used.

The service server 100 may identify the home appliance 10 that is mainly used in the first time period on the basis of the usage patterns, and guide the operation of the home appliance 10 to be performed in a second time period before the first time period, or in a third time period after the first time period.

The service server 100 may register the home appliances 10 by classifying home appliances 10 into the home appliances 10 of a first type that are continuously used and home appliances 10 of a second type that are selectively used on the basis of the information acquired from the home appliance 10. The service server 100 may operate a plurality of home appliances 10 belonging to at least one of the two types according to a pre-designated operation priority when the plurality of home appliances 10 are operated simultaneously during the first time period.

That is, when two or more home appliances 10 belonging to the two types are operated simultaneously in the first time period, the home appliance with the highest operation priority is operated first, and the remaining home appliances are operated in a power saving mode or may be stopped from operating. The operation priority may be set to be different according to the need of a user or automatically determined according to power consumption.

The information of each home appliance 10 stored in the service server 100 may include at least one piece of information of information on power consumption by operation mode, information on usage patterns by time or day of the week, information on whether the home appliance is used continuously or selectively, and information on alternative home appliances and operation modes thereof.

Meanwhile, the service server 100 may include various functions to provide the aforementioned service. The service server 100 is described in more detail as follows.

First, the service server 100 may include the information acquisition unit 110 for acquiring information. The information acquisition unit 110 may acquire information about the home appliance 10 provided in a corresponding household of a user through the user application 310.

The home appliance 10 of the household may be connected to the information acquisition unit 110 so as to transmit and receive data so that the information acquisition unit 110 can receive information data from the home appliance of the corresponding household. In this way, the information acquisition unit 110 may be connected to each home appliance 10 to transmit and receive data online.

The service server 100 may include a load calculation unit 120. The load calculation unit 120 may check real-time power load and calculate or predict power load by time period on the basis of the information acquired from the information acquisition unit 110.

The information calculated or predicted in the load calculation unit 120 may be stored in a database 200.

Meanwhile, the user application 310 may be configured to check the current operating status of each home appliance 10, calculate the total power load of the household, and predict future power load. In this case, the load calculation unit 120 of the service server 100 may be omitted, and information calculated and predicted by the user application 310 may be stored in the database 200.

The service server 100 may include an information provision unit 130. The information provision unit 130 may be configured to provide or receive various types of information by being connected to the server 400 of a power company (a server built to provide power information). For example, the information provision unit 130 provides information required for power demand prediction among each piece of information stored in the database 200, which will be described later, to the server 400 of the power company. The information required for the power demand prediction may include information on power load used by each household or power load predicted to be used by each household.

The information provided by the information provision unit 130 may be provided on a per-user (per household) basis or by classification (for each zone, for each time period, etc.) to the database 200. The information provision unit 130 may receive at least one piece of information of real-time power usage, power supply reserve rate, and time-based average power usage from the server 400 of the power company. In this case, the information may be provided by dividing the information by region and then registered in the database 200.

The service server 100 may include the control unit 140. The control unit 140 obtains information from each home appliance online and processes services requested through each user application 310.

The control unit 140 may obtain various types of information stored in the database 200 from the database 200.

The control unit 140 may acquire information about the home appliance 10 provided in the household of a user through the information acquisition unit. The acquired information may be classified by each category by the control unit 140 and stored in the database 200.

The control unit 140 may control each home appliance 10 in the household online. In this case, the control of each home appliance 10 by the control unit 140 may include the operation of each home appliance 10 by each operation mode.

The control unit 140 may obtain at least one piece of information of real-time power usage, power supply reserve rate, average power usage by time period, and information on time at which the maximum load occurs from the server 400 of the power company through the information provision unit 130.

The control unit 140 may check at least one piece of information among real-time power usage, power supply reserve rate, average power usage by time period, and information on time when maximum load occurs, which is provided from the server 400 of the power company through the database 200.

The control unit 140 may control the operation of a specific home appliance 10 on the basis of the information provided by the power company. For example, when a request to operate the specific home appliance 10 occurs at time at which the maximum load occurs among the information provided from the server 400 of the power company, the execution time of the corresponding operation may be adjusted. The control of the execution time of the operation may be performed in a manner recommended to a corresponding user through the user application 310. When the operation at the recommended time is approved, the control unit 140 schedules the operation to be performed at the corresponding time.

The control unit 140 may be configured to control the operation of the home appliance 10 of a specific household on the basis of household-specific information stored in the database 200. For example, when the current power load of a specific household reaches power load within a preset range, the operation mode or the start or end time of operation of at least one home appliance 10 may be controlled to be adjusted.

The control unit 140 may be configured to perform at least one of the above-described controls, or all of them.

Meanwhile, the information acquisition unit 110, the load calculation unit 120, and the information provision unit 130 constituting the service server 100 of the power management device described above may be programs provided to the service server 100. For example, the information acquisition unit 110 may be one program of the service server 100 programmed to acquire information provided online. For example, the load calculation unit 120 may be one program of the service server 100 programmed to calculate or predict power load by time period. For example, the information provision unit 130 may be one program of the service server 100 programmed to provide information online. Although not shown, the information acquisition unit 110, the load calculation unit 120, and the information provision unit 130 may be provided as different servers or as a single program.

The control unit 140 may be an operating program provided to the service server 100. For example, the control unit 140 may be an operating program that processes and controls the entire program of the service server 100.

All of the information acquisition unit 110, the load calculation unit 120, the information provision unit 130, and the control unit 140 may be included or at least one thereof may be omitted. For example, the control unit 140 of the service server 100 may perform all of the functions of the information acquisition unit 110, the load calculation unit 120, and the information provision unit 130. In this case, the information acquisition unit 110, the load calculation unit 120, and the information provision unit 130 may be omitted.

The service server 100 may include the database 200 in which various types of data are stored. The database 200 stores information acquired by the service server 100.

The information stored in the database 200 may include at least one piece of information among type or model information of each home appliance 10, information on an operation mode that can be performed by each home appliance 10, information on power load for each operation mode, information on current operation status, user information, and power information.

The information stored in database 200 may be stored by being classified by user, area, or time period. The classification by area may be a certain range of areas. For example, areas may be classified by apartment complex, administrative district (city, county, district, dong), and other regions. The classification by time period is information on power load for each user or each zone that is used or will be used per time period.

The database 200 may store, by zone, at least one piece of information among real-time power usage provided by the server 400 of a power company, power supply reserve rate, average power usage by time period, time period predicted to have maximum load, and allowable maximum power. The allowable maximum power may be the allowable load of a transformer provided to a corresponding household or a transformer provided for a specific area. The power company is a company that supplies, sells, produces, or relays power, and the server 400 is a server operated by the power company. The service server 100 may store information acquired from the server 400 of the power company in the database 200.

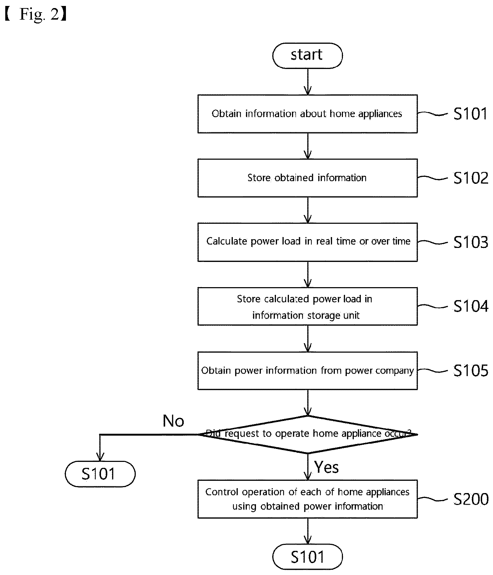

Below, the power management method for managing power in each household by using the power management device according to the embodiment of the present disclosure described above will be described with reference to the flowcharts of FIGS. 2 to 7.

First, as shown in the flowchart of FIG. 2, the power management method may be preceded by a process in which the service server 100 acquires various types of information and the information is registered in the database 200.

To this end, the service server 100 obtains various pieces of information about the home appliance 10 provided in the home of each user in S101.

The various pieces of information about the home appliance 10 provided in the home of the user may be stored in advance in the user application 310.

The information of the home appliance 10 may include at least one piece of information of the type or model name of the corresponding home appliance 10, the power consumption of the corresponding home appliance 10, each operation mode in which the corresponding home appliance 10 can perform, power consumption for each operation mode, current operation status, and a usage pattern.

The pieces of information may be obtained by the service server 100 directly from each home appliance 10 online, through a home network of a household provided with the home appliance 10, or through the user application 310. Alternatively, the service server 100 may receive information which is input by a user through a website, input by an installer during the process of installing the home appliance 10 in a corresponding household, or input when purchasing the home appliance 10.

The information about the home appliance 10 acquired by the service server 100 is stored in the database 200 in S102. In this case, the information about the home appliance 10 may be stored separately for each user or each home in the database 200.

Meanwhile, the service server 100 acquires the current operation mode of the corresponding home appliance 10 periodically, when requested by a user, or when operating at least one home appliance 10.

The information acquired by the service server 100 is provided to the service server 100 through the information acquisition unit 110 and stored in the database 200.

The service server 100 (specifically, the load calculation unit) may calculate in S103 or predict power load. That is, the service server 100 may check real-time power load on the basis of the information stored in the database 200, or calculate or predict power load by time period and change in future power load on the basis of the operation mode information of each home appliance 10. That is, the predicted time of the maximum load of a corresponding household may be calculated or predicted by calculating the power load.

In addition, the information calculated or predicted in this way may be stored in the database 200 in S104.

The service server 100 (specifically, the information provision unit) may provide power-related information (real-time power load, power load by time period, or power load to be used in the future) for each user stored in the database 200 to the server 400 of the power company.

The power-related information for each user provided to the server 400 of the power company may be provided in an integrated manner by a preset region, zone, or area. For example, real-time power load by apartment complex or transformer, power load by time period, and power load to be used in the future are integrated and provided to the power company. This prevents personal information (information on each household) from being leaked and used without the consent of a user, while still allowing the power company to obtain sufficiently meaningful information.

Accordingly, the power company may accurately predict power demand in a corresponding zone and produce or supply an appropriate amount of electricity for each time by taking into account the predicted demand.

In particular, the power company may flexibly set a time period for electricity use at low rates by using the predicted power demand.

The information provided to the server 400 of the power company above may be provided by dividing the information into power load that is continuously used and power load that is selectively used. For this purpose, the information about the home appliance 10 for each user stored in the database 200 may be divided into the first type of the home appliance 10 that is continuously used and the second type of the home appliance 10 that is selectively used. By this division of the home appliance 10, the home appliance 10 of the first type may be operated with priority over the home appliance 10 of the second type, or the home appliance 10 of the second type may be operated in consideration of the home appliance 10 of the first type.

Meanwhile, the service server 100 receives information on power (information on power load) that the power company has (or calculates) from the server 400 of the power company in S105.

The power information may include information on a time period (hereinafter referred to as "the first time period") in which a maximum load occurs or is predicted to occur or in which power is insufficient or is predicted to be insufficient. The power information may further include at least one piece of information among real-time power usage, power supply reserve ratio, and average power usage by time period.

The power information may be provided by a household, or by region, district, or area to which the household belongs. For example, information on the first time period may be provided for each apartment complex using the same transformer or for each transformer.

In addition, the service server 100 may control the operation of each home appliance 10 in S200 when a request to operate the home appliance 10 occurs through the user application 310. The control may be a control for limiting the operation or operation mode of the home appliance 10 of the corresponding household.

Each of these controls in S200 is explained with examples as follows.

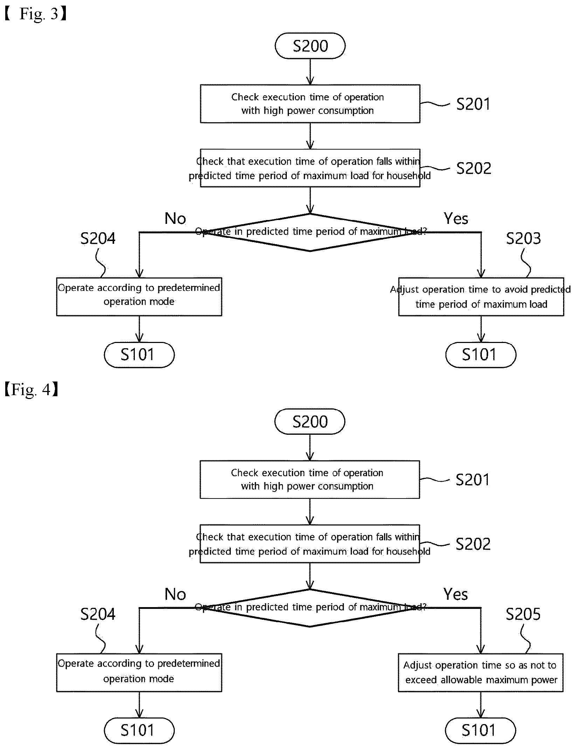

First, according to an example of the control, the service server 100 may control the execution time of the operation of each operation mode of the home appliance 10, which is continuously used in each household, with relatively high power consumption, to be operated so as to avoid the predicted time period of the maximum load in the corresponding household. That is, as shown in the flowchart of the attached FIG. 3, the execution time of the operation with high power consumption is checked in S201, whether the execution time of the operation falls within the predicted time period of the maximum load is checked in S202, and the operation time is controlled to be adjusted to avoid the predicted time period of the maximum load in S203. In this case, the service server 100 (specifically, the load calculation unit) may calculate or predict the predicted time period of the maximum load by using information collected from each home appliance 10.

For example, even when a cycle for performing the defrosting operation of a refrigerator arrives, the defrosting operation is controlled to avoid the predicted time period of maximum load.

Of course, as shown in the attached FIG. 4, even if the execution time of an operation in which power consumption is high falls within the predicted time period of maximum load, the operation time may be adjusted so as not to exceed the allowable maximum power in S205.

When the operation is not performed during the predicted time period of maximum load, the operation is performed according to a predetermined operation mode in S204.

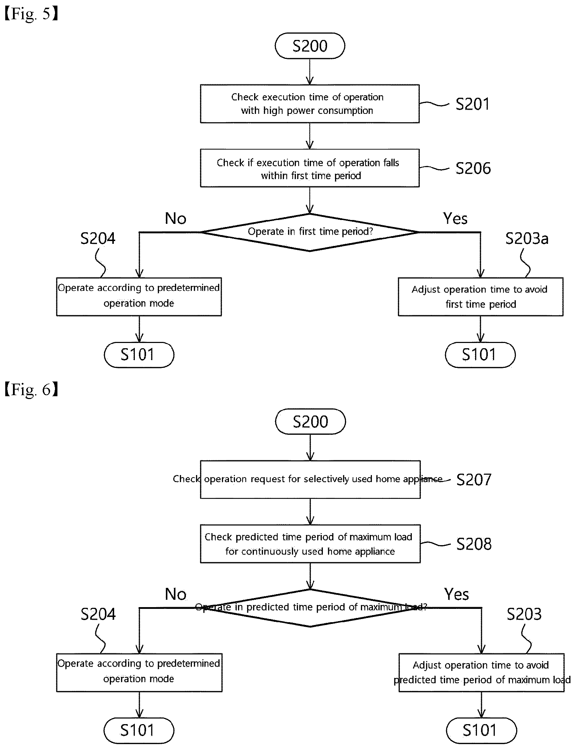

According to another example of the control in S200, when a request to operate one home appliance 10 is generated through the user application 310 or through a manipulation unit (not shown) of the home appliance 10, the service server 100 may control the operation to be operated so as to avoid the first time period provided from the server 400 of the power company. That is, as shown in the attached FIG. 5, the execution time of an operation with high power consumption is checked in S201, and whether the checked execution time of the operation belongs to the first time period is checked in S206, and the operation is controlled to avoid the first time period in S203.

For example, in the case of an air conditioner, it is possible to perform the operation at maximum load before the first time period to lower the indoor temperature in advance, thereby enabling an energy-saving operation during the first time period.

Of course, the service server 100 may control the start time of the operation so that the first time period and time at which the maximum load of the corresponding operation is required are different.

According to another example of the control in S200, when a request to operate one home appliance 10 is generated through the user application 310 or through the manipulation unit of the home appliance 10, the service server 100 may change an operation mode so as not to exceed the maximum power load of a corresponding household. In this case, the maximum power load may be power load within a preset range or power load automatically set by considering the recent average power consumption of the corresponding household.

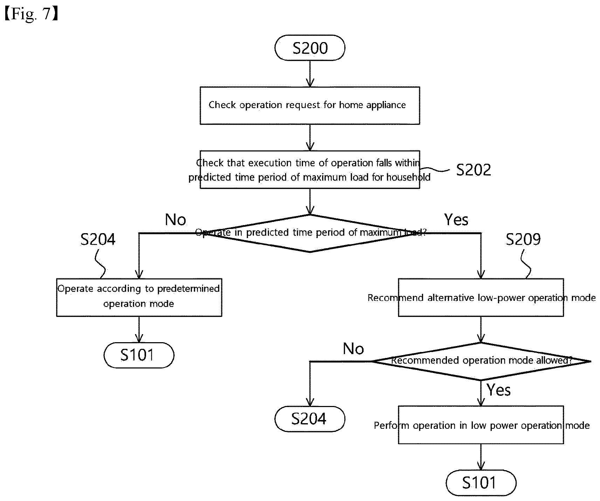

For example, as shown in the attached FIG. 7, when it is predicted that the maximum power load of a corresponding household will be exceeded when the home appliance 10, for which operation has been requested, is operated, the service server 100 may change or recommend the operation mode of the home appliance 10 to a low-power operation mode that consumes relatively low power in S209).

According to another example of the control in S200, when a request to operate one home appliance 10 is generated through the user application 310 or through the manipulation unit of the home appliance 10, the service server 100 may control the operation to be performed by considering information about other home appliances 10 that are continuously used.

For example, when a request to operate a home appliance 10 which is selectively used is checked in S207 as shown in the attached FIG. 6, the service server 100 checks time at which the maximum load of a home appliance 10 which is continuously used occurs in S208. After that, the service server 100 may control the operation of the home appliance 10, for which the operation is requested before the time at which the maximum load occurs, to be stopped, or the operation of the home appliance 10, for which the operation is requested after the time, to be started.

Meanwhile, the operation control of each of the home appliances 10 by the service server 100 described above did not consider the usage pattern of a user. Accordingly, when the user is unable to operate the home appliance 10 according to his/her usual usage pattern, this may result in dissatisfaction of the user.

Considering this, it may be more preferable that the service server 100 controls the operation of the home appliance 10 through the user application 310 according to the usage pattern of a user.

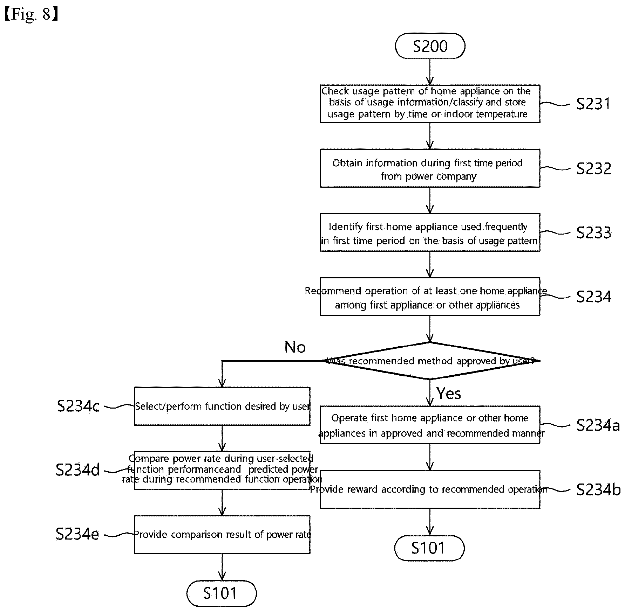

Accordingly, the power management method in which the service server 100 controls the operation of each home appliance 10 according to the usage pattern of a user will be described below with reference to FIG. 8.

First, the service server 100 classifies and stores usage patterns on the basis of the information of corresponding home appliances 10 provided from each of the home appliances 10 in S231.

The usage patterns may be classified and then stored on the basis of the usage information of each of the home appliance 10. That is, on the basis of the usage information of the home appliances 10, a home appliance (or home appliance and operation mode) with high usage by time is stored.

For example, a usage pattern may be stored in which a robot vacuum cleaner is mainly used at 10 AM, a dishwasher and an air conditioner are mainly used at 2 PM, a wash tower (a washing machine or a dryer) is mainly used at 3 PM, and a clothing care appliance (e.g. an LG Styler, etc.) is mainly used at 7 PM. In this case, the usage pattern may store the operation mode of each home appliance. The usage pattern may be classified by day of the week or indoor temperature.

Additionally, the service server 100 receives information about the first time period, in which power supply is insufficient or maximum load is predicted, from a power company in S232. The first time period may vary depending on the season, date, or power supply and demand conditions.

When information of the first time period is acquired, the service server 100 identifies at least one first home appliance 10 that is frequently used in the first time period on the basis of a pre-classified usage pattern in S233.

When the first home appliance 10 that is operated during the first time period is identified, the service server 100 performs control of each of the home appliances 10 to reduce power consumption during the first time period. That is, the service server 100 recommends that the identified first home appliance 10 or other home appliances 10 be operated in a different pattern from the pre-stored usage pattern in S234.

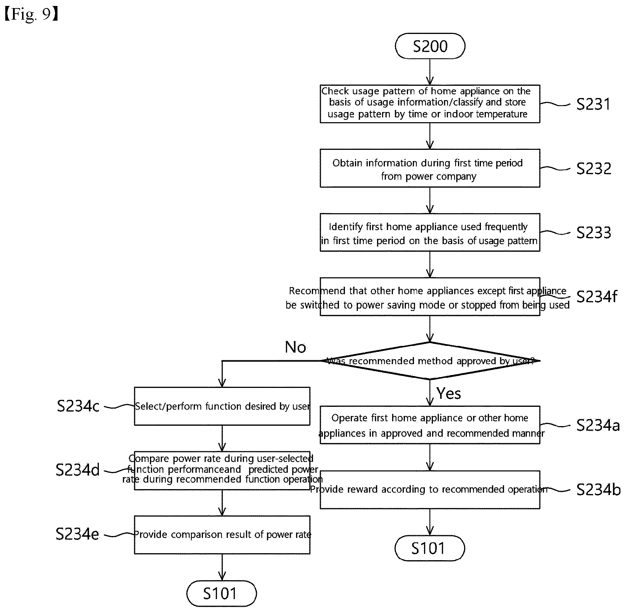

For example, as shown in the flowchart of FIG. 9, the home appliances 10 other than the first home appliance 10 that was used frequently during the same time period as the first time period may be recommended to be switched to a power saving mode or stopped from being used in S234f.

The recommendation may be performed through the user application 310. A user may receive the recommended information through the user application 310 and determine whether to approve the recommended information.

When the user approves the operation with the recommended information, the first home appliance 10 and the other home appliances 10 are operated in the recommended manner in S234a. Additionally, a reward may be provided for performing the recommended operation in S234b.

On the other hand, when the user does not approve the operation with the recommended information, each of the home appliances 10 selects a function desired by the user (simultaneous operation with the first home appliance, disabling a power saving mode, etc.) and performs the operation with the selected function in S234c.

In addition, when operating in a non-recommended manner, a power cost incurred when the operation is performed with the function selected by the user is checked, and the power cost and a power cost predicted when the recommended function is operated are compared in S234d, and then the comparison result is provided to the corresponding user in S234e. This allows the user to accurately know a power saving effect when using the recommended function.

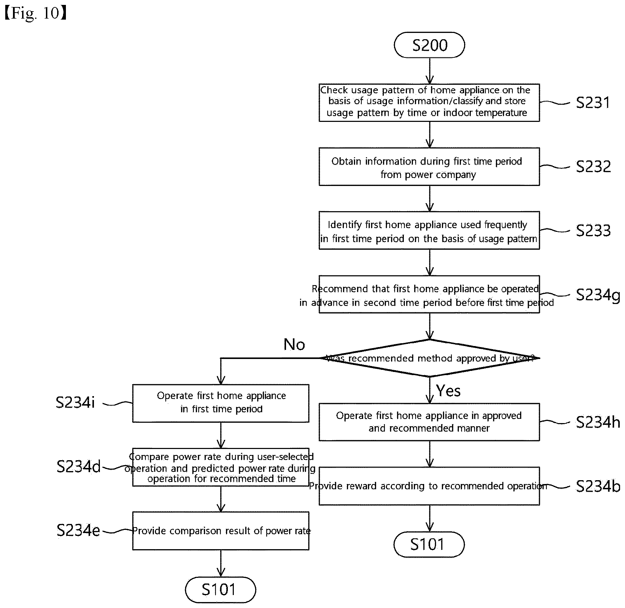

As another example, as shown in the flowchart of FIG. 10, it may be recommended that the first home appliance 10, which was used frequently in the same time period as the first time period, be operated in advance in the time period (the second time period) before the first time period in S234g. This allows the first home appliance 10 to be switched to a power saving mode or to stop its usage during the first time period, thereby reducing power consumption.

For example, in the case of an air conditioner, it may be recommended that the air conditioner be operated so that a temperature can be lowered to a preset temperature 30 minutes before the first time period (the second time period), and then be switched to a power saving mode or stopped from being used during the first time period.

When a user approves the operation with recommended information, the first home appliance 10 is operated in the recommended manner in S234h. In addition, a reward may be provided for performing the recommended operation in S234b.

Although not described in detail, as a method to prevent power usage from being concentrated in the first time period, at least one first home appliance 10, which is operated frequently in the first time period, may operate in the third time period after the first time period. However, the method of controlling the first home appliance 10 to operate during the third time period may have a disadvantage in that a desired result cannot be obtained at time required by a user. Considering this, it may be more preferable that at least one first electric appliance 10 which is operated frequently in the first time period be performed in the second time period.

On the other hand, when a user does not approve the operation with the recommended information, the first home appliance 10 is operated in the first time period in S234i.

In addition, when operating in the non-recommended manner, a power cost incurred when the operation is performed with the function selected by the user is checked, and the power cost and a power cost predicted when the recommended function is operated are compared in S234d, and then the comparison result is provided to the corresponding user in S234e. This allows the user to accurately know a power saving effect when using the recommended function.

Meanwhile, it may be difficult to operate other home appliances other than the identified first home appliance 10 in a power saving mode or to stop using the other home appliances. For example, the first home appliance 10, which is frequently used in the first time period, may include a home appliance (e.g., a refrigerator) that is operated continuously. In addition, it may be difficult to operate the home appliance 10, which is operated continuously, in a power saving mode or stop using the home appliance 10 during the same time period even if one home appliance 10 is used during the first time period depending on operating conditions.

Considering this, each of the home appliances 10 may be set to have an operation priority according to the choice of a user. To this end, the service server 100 may register the home appliances 10 by classifying the home appliances 10 into home appliances 10 of the first type that are operated continuously and home appliances 10 of the second type that are not operated continuously on the basis of the information of the home appliances 10 acquired from each of the home appliances 10.

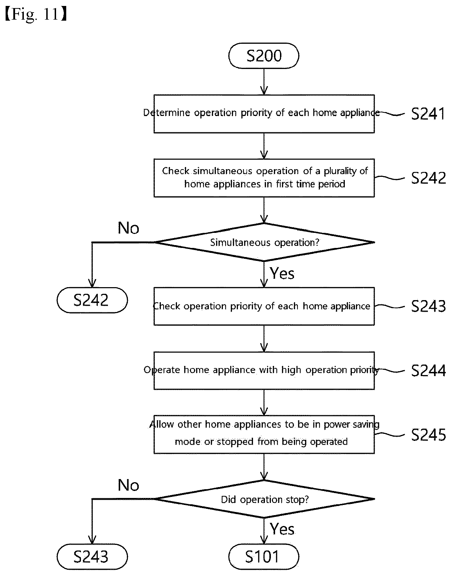

In addition, when the home appliances 10 belonging to the two types are requested to be operated simultaneously during the first time period, the service server 100 may check a pre-designated operation priority, and control a home appliance 10 with a higher operation priority to be operated first in S244, and then a home appliance 10 with the next operation priority to be operated sequentially. This is the same as the flowchart of FIG. 11.

The operation priority may be selected directly by a user, or may be automatically determined by the service server 100 according to an operation mode for each time period of each home appliance 10 acquired from each home appliance 10. Preferably, the home appliance 10 of the first type, which is continuously used, may be determined to have a higher priority than the home appliance 10 of the second type, which is not operated continuously. For example, when a refrigerator which belongs to the home appliance of the first type and a washing machine which belongs to the home appliance of the second type are operated simultaneously in the first time period, the refrigerator is controlled to operate first, and then the washing machine is controlled to operate.

In particular, when one home appliance is operated according to the operation priority, other home appliances may be controlled to be maintained in a power saving mode or to be stopped from operating in S245.

In this way, since each home appliance 10 is operated sequentially according to the operation priority during the first time period in which power is insufficient, power consumption during the first time period may be reduced.

The operation of the home appliance 10 according to the operation priority may be applied even if the home appliance of the first type and the home appliance of the second type are not operated simultaneously. That is, when a plurality of home appliances 10 of at least one type is operated simultaneously in the first time period, the home appliances 10 may be operated sequentially according to the predetermined operation priority of each of the home appliances 10.

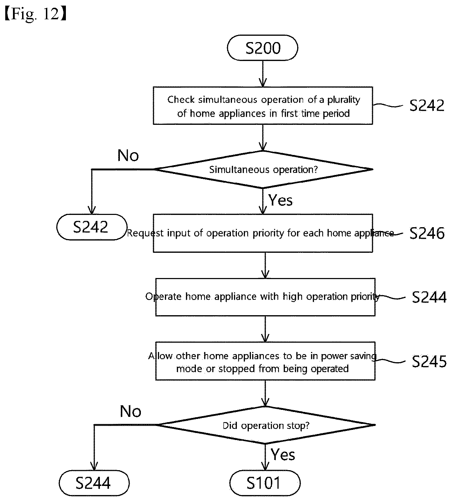

Additionally, the determination on the operation priority of each of the home appliances 10 may be performed when it is checked that the plurality of home appliances 10 is operated simultaneously in the first time period. That is, as shown in the flowchart of FIG. 12, if it is checked that the plurality of home appliances 10 is operated simultaneously in the first time period in S242, the service server 100 may request a user to input (determine) the operation priority through the user application 310 in S246.

Meanwhile, the method of managing power according to the usage pattern of a user described in the power management method according to an embodiment of the present disclosure described above may result in a case in which the user does not obtain a desired result.

For example, a user may want to finish washing and drying a garment during the first time period, but in order to distribute power during the first time period, the washing and drying of the garment may end after the first time period.

In consideration of this, the power management method according to another embodiment of the present disclosure provides a method that allows a service desired by a user to be provided in the first time period while preventing the problem of power consumption being concentrated in the first time period.

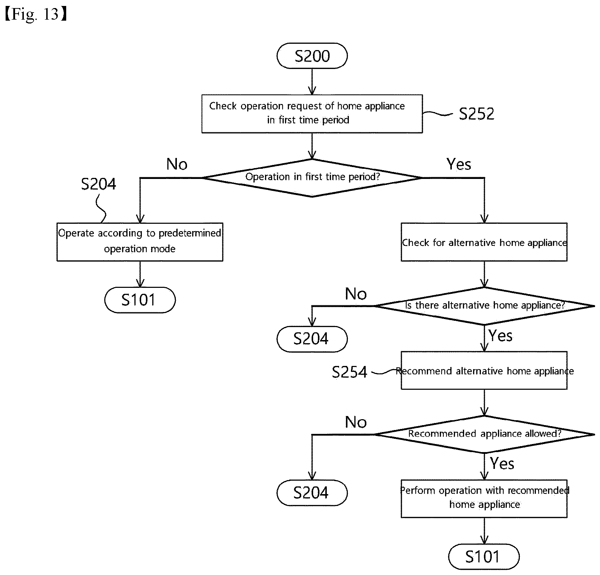

According to the power management method according to the another embodiment of the present disclosure, as illustrated in FIG. 13, when the operation of one home appliance 10 is requested in the first time period in S252, other home appliances 10 that can replace the operation of the home appliance 10 may be recommended in S25.

For example, the user application 310 or, through a wash tower (a washing machine and a dryer), the operation of the washing and drying modes to wash and dry a garment by using the corresponding wash tower during the first time period may be requested. In this case, the service server 100 checks for other home appliances (a clothing care appliance) and an operation mode (a sterilization operation mode) that can replace the corresponding home appliance (the wash tower) registered in the database 200. In addition, the checked alternative home appliance (the clothing care appliance) and the operation mode (the sterilization operation mode) are recommended through the user application 310 in S254.

Accordingly, it is possible to provide a service desired by a user while preventing power consumption from being concentrated in the first time period.

The alternative home appliance 10 and the operation mode may be classified on the basis of the information of the home appliance 10 provided to the service server 100 from the user application 310. That is, home appliances by operation modes which consume different amounts of energy while providing similar effects are classified by the service server 100 and then registered in the database 200, so that an alternative home appliance may be easily searched for when needed.

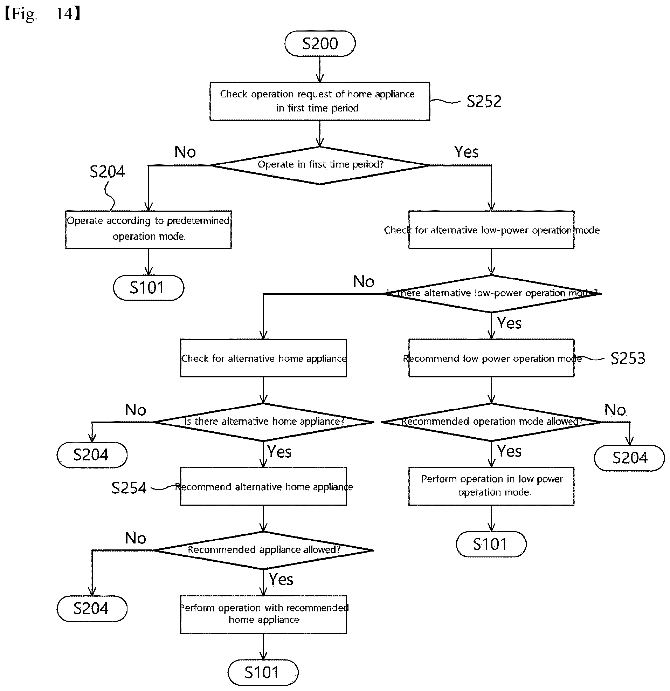

When there is a low-power operation mode that is capable of an alternative operation with relatively low power consumption in the home appliance 10 for which operation is requested as shown in FIG. 14, the low-power operation mode is recommended in S253. After performing checking for the alternative low-power operation mode, when there is no alternative low-power operation mode, the checking and recommendation of the alternative home appliance may be performed in S254.

The power management method according to another embodiment of the present disclosure may be performed independently from the power management method according to an embodiment of the present disclosure described above.

That is, even if the power management device of the present disclosure does not receive information about the first time period from the power company, when a request to operate a home appliance 10 occurs, an alternative home appliance with relatively lower power consumption or an alternative operation mode may be recommended.

Meanwhile, it is preferable that the control of each embodiment described above be performed after recommending the control to a user of a corresponding household through the user application 310 or the corresponding home appliance 10 and obtaining the consent of the corresponding user. Of course, the service server 100 may automatically determine and control during each control situation on the basis of the initial user consent.

The control performed by the service server 100 is a control for the power company to reduce the instantaneous power load of the power company.

Considering this, the power company providing incentives to users when performing the control may induce higher participation. That is, the power company may provide incentives (e.g., discounts on electricity rates or rewards such as mileage) when a preset maximum load is not exceeded for a set period or time period for a predetermined area.

In addition, the service server 100 may calculate difference in electricity bills or contribution to environmental improvement when the home appliance 10 is used in recommended operation and non-recommended operation and inform a corresponding user of the difference or contribution through the user application 310.

Accordingly, the power management device and the power management method of the present disclosure may enable more efficient power management because households and the power company share power information with each other. In this case, the power company is capable of predicting real-time power demand.

The power management device and the power management method of the present disclosure may reduce maximum power load used in a corresponding household at a specific time point because the home appliance 10 is operated within a set range of power load. That is, control may be performed so as not to exceed the power load allowed in the corresponding household.

The power management device and the power management method of the present disclosure allow the operation of the home appliance 10 performed in the first time period to be performed in consideration of the usage pattern of a user. Accordingly, the home appliance 10, which is mainly used, may be operated without increasing power consumption in the first time period.

According to the power management device and the power management method of the present disclosure, when a plurality of home appliances 10 are required to be operated simultaneously in the first time period, each of the home appliances is operated sequentially according to the pre-designated operation priority. Accordingly, power consumption in the first time period may be reduced.

According to the power management device and the power management method of the present disclosure, when operating one home appliance 10 provided in a household during the first time period, it is recommended to use other home appliances 10 that consume less power and can be replaced. Accordingly, it is possible to minimize power consumption to perform an operation required by a user in the first time period.

In the above, even though all the components constituting the embodiments according to the present disclosure have been described as being combined or operating in combination as one, the present disclosure is not necessarily limited to these embodiments. That is, within the scope of the objective of the present disclosure, one or more of all of the components may be selectively combined to operate. In addition, the terms "include", "comprise", or "have", as used herein, unless otherwise specifically stated, imply that the relevant component may be present, and therefore should be construed to include other components rather than to exclude other components. All terms, including technical or scientific terms, unless otherwise defined, have the same meanings as commonly understood by those skilled in the art to which the present disclosure belongs. Commonly used terms, such as terms defined in a dictionary, should be interpreted as being consistent with their contextual meaning in the relevant technology and should not be interpreted in an idealized or overly formal sense unless expressly defined in the present disclosure.

The above explanation is merely an exemplary description of the technical idea of the present disclosure, and those skilled in the art to which the present disclosure belongs may make various modifications and variations without departing from the essential characteristics of the present disclosure. Accordingly, the embodiments disclosed in the present disclosure are intended to explain rather than limit the technical idea of the present disclosure, and the scope of the technical idea of the present disclosure is not limited by these embodiments. The scope of protection of the present disclosure should be interpreted by the claims below, and all technical ideas within the equivalent scope should be interpreted as being included in the scope of the claims of the present disclosure.

## Claims

1. A power management device comprising:
a service server that receives and stores information about each of home appliances and provides a control signal to each of the home appliances;
a user application that receives the information about each of the home appliances from the service server and provides information requested or selected by a user to the service server,
wherein the service server classifies and stores a usage pattern on the basis of the information provided from each of the home appliances,
identifies one or more home appliances that are operated in a first time period to reduce power consumption in the first time period in which power supply is insufficient or maximum load is predicted, and recommends that at least one home appliance among the identified home appliances or other home appliances be operated differently from the stored usage pattern.

2. The power management device of claim 1, wherein the usage pattern is set by at least one of time and an indoor temperature.

3. The power management device of claim 1, wherein the service server identifies a home appliance that is mainly used in the first time period on the basis of the classified usage pattern, and
recommends through the user application that home appliances other than the identified home appliance be switched to a power saving mode or stopped from being used.

4. The power management device of claim 1, wherein the service server identifies a home appliance that is mainly used in the first time period on the basis of the classified usage pattern, and
guides an operation of the home appliance to be performed in a second time period before the first time period or in a third time period after the first time period.

5. The power management device of claim 1, wherein the service server registers the home appliances by classifying the home appliances into a first type for continuous use and a second type for selective use on the basis of the information about the home appliances.

6. The power management device of claim 5, wherein the service server sequentially operates each of two or more home appliances belonging to the two types according to a pre-designated operation priority when the home appliances are required to be operated simultaneously during the first time period.

7. The power management device of claim 1, wherein the service server identifies a home appliance that is mainly used in the first time period on the basis of the classified usage pattern, and
identifies an alternative home appliance with an alternative operation mode that consumes relatively less energy than the home appliance and recommends the alternative home appliance through the user application.

8. The power management device of claim 7, wherein the alternative home appliance is a home appliance that has an operation mode classified as a function similar to an operation mode registered in the usage pattern.

9. The power management device of claim 1, wherein the information about each of the home appliances stored in the service server comprises at least one piece of information of information on power consumption by an operation mode, information on a usage pattern by time or day of the week, information on whether the home appliance is used continuously or selectively, and information on an alternative home appliance and an operation mode thereof.

10. A power management device comprising:
a service server that receives and stores information about each of the home appliances and provides a control signal to each of the home appliances;
a user application that receives the information about each of the home appliances from the service server and provides information requested or selected by a user to the service server,
wherein when an operation of one home appliance is requested, the service server identifies an alternative home appliance with an alternative operation mode that consumes relatively less energy than the home appliance and recommends the alternative home appliance through the user application.

11. The power management device of claim 10, wherein the service server classifies and stores the home appliances by operation modes which consume different amounts of energy while providing similar effects on the basis of the information about the home appliances.

12. A power management method comprising:
a first step of acquiring and storing information about two or more home appliances provided in a household;
a second step of identifying at least one first home appliance that is operated or is predicted to be operated during a first time period in which power supply is insufficient; and
a third step of recommending an operation of the first home appliance identified in the second step or operations of other home appliances to reduce power consumption during the first time period.

13. The power management method of claim 12, wherein the first step comprises a first process of classifying and storing a usage pattern for each of the home appliances, respectively, on the basis of the information about the home appliances, and
the third step comprises a second process of identifying a home appliance that is mainly used in the first time period on the basis of the usage pattern for each of the home appliances classified in the first process and recommending, through a user application, that home appliances other than the identified home appliance be switched to a power saving mode or stopped from being used.

14. The power management method of claim 12, wherein the first step comprises a third process of registering the home appliances by classifying the home appliances into home appliances of a first type that are used continuously and home appliances of a second type that are used selectively on the basis of the information about the home appliances, and
the third step comprises a fourth process of operating two or more home appliances belonging to the two types according to a pre-designated operation priority when the two or more home appliances are operated simultaneously in the first time period.

15. The power management method of claim 12, wherein the first step comprises a fifth process of classifying and storing the home appliances by operation modes which consume different amounts of energy while providing similar effects on the basis of the information about the home appliances, and
the third step comprises a sixth process of recommending, through a user application, an alternative home appliance with an alternative operation mode that consumes relatively less energy when identifying home appliances that are operated or are predicted to be operated in the first time period on the basis of the information about the home appliances classified by the operation modes.
